# FASCICULE DE BREVET EUROPEEN

(11) **EP 3 106 027 B1**
(45) Date de publication et mention de la délivrance du brevet: **21.03.2018**
(21) Numéro de dépôt: 16305727.6
(22) Date de dépôt: 15.06.2016
(51) Int. Cl.: A01K 1/00, A01K 1/02, A01K 1/03

(54) **STRUCTURE D'ACCUEIL POUR UN ANIMAL D'ÉLEVAGE, EN PARTICULIER UN VEAU**
AUFNAHMESTRUKTUR FÜR EIN ZUCHTTIER, INSBESONDERE EIN KALB
STRUCTURE FOR HOUSING A LIVESTOCK ANIMAL, IN PARTICULAR A CALF

(30) Priorité: 17.06.2015 FR 1555542
(43) Date de publication de la demande: 21.12.2016
(73) Titulaire: Polymoule, 72550 Coulans sur Gee (FR)
(72) Inventeur: COSNET, Gilbert, 72550 Degré (FR)
(74) Mandataire: Jacobacci Coralis Harle

(56) Documents cités:
- EP-A1- 2 705 747
- EP-A2- 2 803 262
- US-A- 3 009 211
- US-A- 4 462 335

## Description

### DOMAINE TECHNIQUE AUQUEL SE RAPPORTE L'INVENTION

La présente invention concerne le domaine des structures d'accueil pour animaux d'élevage, en particulier des veaux, comprenant un abri délimitant un espace d'accueil intérieur pour l'animal.

### ARRIERE-PLAN TECHNOLOGIQUE

La santé des animaux constitue l'un des aspects décisifs pour le succès d'un élevage.

A cet égard, pour les élevages en extérieur, il est intéressant de prévoir des abris légers déplaçables, dénommés encore « niche » ou « igloo », dans lesquels les animaux peuvent se protéger des conditions météorologiques, notamment du froid, du soleil ou de la pluie, tout en restant en plein air.

Ce type de structure d'accueil, individuel, souvent employé pour les veaux de 0 à 2 mois, permet d'abriter un grand nombre d'animaux sur une exploitation, sans pour autant nécessiter de surface couverte.

Il présente également l'intérêt de permettre :
- une isolation/séparation des veaux entre eux, pour les premiers jours nécessaires au développement de leur immunité,
- un coût à la place très compétitif,
- une vue globale sur tout le cheptel,
- une excellente maniabilité et une grande mobilité, et
- une adaptation rapide de la capacité d'élevage sur l'exploitation.

De manière habituelle, ces abris comprennent une paroi périphérique comportant une cloison avant dans laquelle est ménagé un passage pour la circulation de l'animal.

Cette paroi périphérique est aujourd'hui tout simplement déposée sur le sol, ou sur un plancher ajouré, du type caillebotis, permettant de laisser passer les jus pour améliorer l'hygiène intérieure. Elle est parfois associée à un parc délimitant un espace d'accueil extérieur pour l'animal.

On connait par exemple par les documents US-3 009 211 et US-4 462 335 de telles structures d'accueil qui comportent un abri monté pivotant sur un plancher/caillebotis, pour permettre à l'éleveur d'accéder à l'espace d'accueil intérieur ou sous le caillebotis, notamment dans le cadre d'opérations journalières de nettoyage et de maintenance.

Dans le document US-4 462 335, le passage pour la circulation de l'animal est placé en regard d'un parc fixe constituant un espace d'accueil extérieur pour l'animal.

Mais ce genre de structure d'accueil avec plancher et parc pose encore des problèmes d'accessibilité aux différentes zones d'évolution de l'animal, et de manipulation de ses différents éléments constitutifs

### OBJET DE L'INVENTION

Dans ce contexte, la présente invention propose une nouvelle structure d'accueil pour un animal d'élevage, en particulier un veau, dont le but est de remédier aux problèmes précités d'accès et de manipulation de ses éléments constitutifs.

Cette structure d'accueil comprend un abri délimitant un espace d'accueil intérieur pour ledit animal, lequel abri comprend :
- une paroi périphérique, comportant une bordure inférieure et une cloison avant dans laquelle est ménagé un passage pour la circulation dudit animal, et
- un plancher, du type caillebotis, comportant une face supérieure sur laquelle repose ladite bordure inférieure de ladite paroi périphérique,
ledit plancher étant assemblé avec ladite paroi périphérique par le biais de moyens de liaison pivot agencés pour autoriser une manoeuvre en rotation de ladite paroi périphérique par rapport audit plancher entre deux positions :
- une position abaissée, dans laquelle ladite bordure inférieure de ladite paroi périphérique est attenante à ladite face supérieure dudit plancher, pour délimiter ledit espace d'accueil intérieur, et
- une position relevée, dans laquelle ladite paroi périphérique est pivotée par rapport audit plancher, de manière à faciliter l'accès audit plancher et/ou à l'intérieur de ladite paroi périphérique,
laquelle structure d'accueil comprend encore un parc destiné à délimiter un espace d'accueil extérieur pour ledit animal ;
lequel parc comprend deux panneaux latéraux délimités chacun par deux extrémités, à savoir :
- deux extrémités avant en regard, reliées par un panneau transversal, et
- deux extrémités arrière en regard ;

Et conformément à l'invention, lesdites deux extrémités arrières des panneaux latéraux du parc sont solidarisées avec ledit abri par le biais de moyens de liaison pivot agencés pour autoriser une manoeuvre en rotation dudit parc par rapport audit abri entre deux positions :
- une position déployée, apte à reposer sur le sol et agencée en regard du passage de l'abri pour délimiter ledit espace d'accueil extérieur, et
- une position escamotée, dans laquelle ledit parc est relevé par rapport au sol, de sorte que les panneaux latéraux s'étendent de part et d'autre de la paroi périphérique de l'abri et que le panneau transversal s'étende au-dessus de la paroi périphérique de l'abri,
et lesdits moyens de liaison pivot entre le plancher et la paroi périphérique de l'abri sont agencés au niveau de la cloison avant de la paroi périphérique, sous-jacent dudit passage pour la circulation de l'animal.

De préférence, lesdits moyens de liaison pivot entre le plancher et la paroi périphérique de l'abri forment également lesdits moyens de liaison pivot entre l'abri et le parc, permettant un pivotement selon un même axe de rotation.

D'autres caractéristiques non limitatives et avantageuses de la structure d'accueil conforme à l'invention, prises individuellement ou selon toutes les combinaisons techniquement possibles, sont les suivantes :
- les moyens de liaison pivot consistent en des moyens adaptés à assurer une liaison pivot amovible entre ledit plancher, ladite paroi périphérique et ledit parc ; pour cela, lesdits moyens de liaison pivot comprennent avantageusement un arbre amovible, s'étendant au travers d'orifices coaxiaux ménagés dans ladite paroi périphérique, ledit plancher et ledit parc. De préférence encore, (i) la paroi périphérique de l'abri comprend deux cloisons longitudinales dont les extrémités avant, du côté de la cloison avant, sont munies desdits orifices, (ii) les extrémités arrière des panneaux latéraux du parc sont munies desdits orifices et sont disposées de part et d'autre desdites cloisons longitudinales de ladite paroi périphérique, et (iii) le plancher comporte un côté avant comportant deux organes saillants qui sont munis desdits orifices et qui sont ménagés de part et d'autre desdites extrémités arrière des panneaux latéraux du parc ;
- le plancher comprend une face inférieure, destinée à être orientée vers le sol, qui est équipée de moyens de roulement sur le sol. Dans ce cas, de préférence, ledit plancher comporte deux côtés opposés, l'un avant, sous-jacent du passage ménagé dans la paroi périphérique, et l'autre arrière ; lesdits moyens de roulement se situent au niveau dudit côté avant ; et ledit côté arrière est équipé de moyens de préhension ;

- la face inférieure du plancher comporte une structure de piètement, de sorte à former un plan de pose sur le sol décalé verticalement par rapport à ladite face inférieure ; dans ce cas, les moyens de roulement se situent avantageusement, d'une part, dans ou au-dessus dudit plan de pose et, d'autre part, au moins partiellement entre ladite structure de piètement et le côté avant du plancher ;
- la face supérieure du plancher comporte une gorge périphérique destinée à recevoir ladite bordure inférieure de la paroi périphérique ; cette gorge périphérique du plancher comporte un bord intérieur et un bord extérieur, et la face supérieure du plancher comporte avantageusement une nervure périphérique ménagée le long dudit bord intérieure de ladite gorge périphérique.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue générale et en perspective de la structure d'accueil selon l'invention, orientée du côté de la cloison avant de l'abri, dans laquelle la paroi périphérique est en position abaissée sur le plancher, et le parc en position déployée ;
- la figure 2 est une vue générale et en perspective de la structure d'accueil selon la figure 1, orientée ici du côté de la cloison arrière de l'abri ;
- la figure 3 est une vue de côté de la structure d'accueil selon les figures 1 et 2 ;
- la figure 4 est une vue en coupe selon le plan vertical IV-IV de la figure 3, passant par l'axe de rotation, qui montre en détails et partiellement les moyens de liaison pivot de la structure d'accueil ;
- la figure 5 est une vue selon le plan de coupe vertical V-V de la figure 3, passant entre les cloisons avant et arrière de l'abri ;
- la figure 6 représente le détail VI de la figure 5, de manière agrandie, illustrant le positionnement de la bordure inférieure de la paroi périphérique dans la gorge complémentaire du plancher ;
- la figure 7 représente, de manière agrandie, le détail VII de la figure 3, de manière à illustrer l'agencement des moyens de roulement sur le sol équipant le plancher ;
- les figures 8 et 9 montrent la structure d'accueil selon la figure 1, vue respectivement en perspective et de côté, dans laquelle l'abri est ouvert par le pivotement en position relevée de la paroi périphérique par rapport au plancher ;
- la figure 10 illustre la structure d'accueil selon la figure 1, dans laquelle le parc est manoeuvré en position escamotée, tout en maintenant la paroi périphérique en position abaissée ;
- la figure 11 illustre la manipulation de la structure d'accueil pour faciliter son déplacement, lors de la mise en appui sur le sol des moyens de roulement obtenue par le basculement de l'abri vers l'avant.

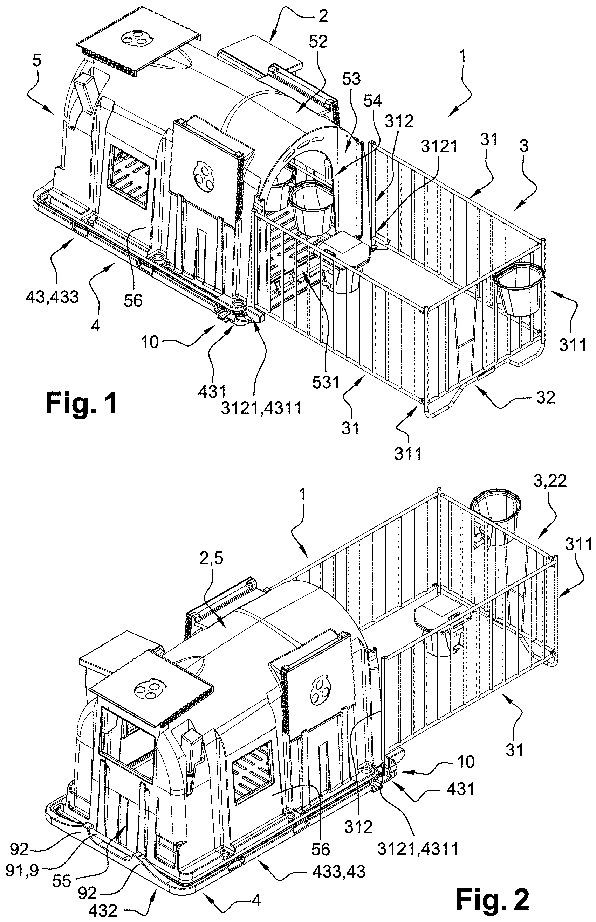

La structure d'accueil 1, telle que représentée sur les figures 1 à 3, est destinée à équiper une exploitation agricole, en particulier pour l'élevage de veaux mais aussi éventuellement pour des porcins, des caprins ou analogues.

Cette structure d'accueil 1, adaptée à recevoir un animal d'élevage (très généralement un veau), comprend deux éléments principaux :
- un abri 2, couramment désigné sous le nom de « niche » ou « igloo », destiné à délimiter un espace d'accueil intérieur pour l'animal, et
- un parc 3, destiné à délimiter un espace d'accueil extérieur pour l'animal.

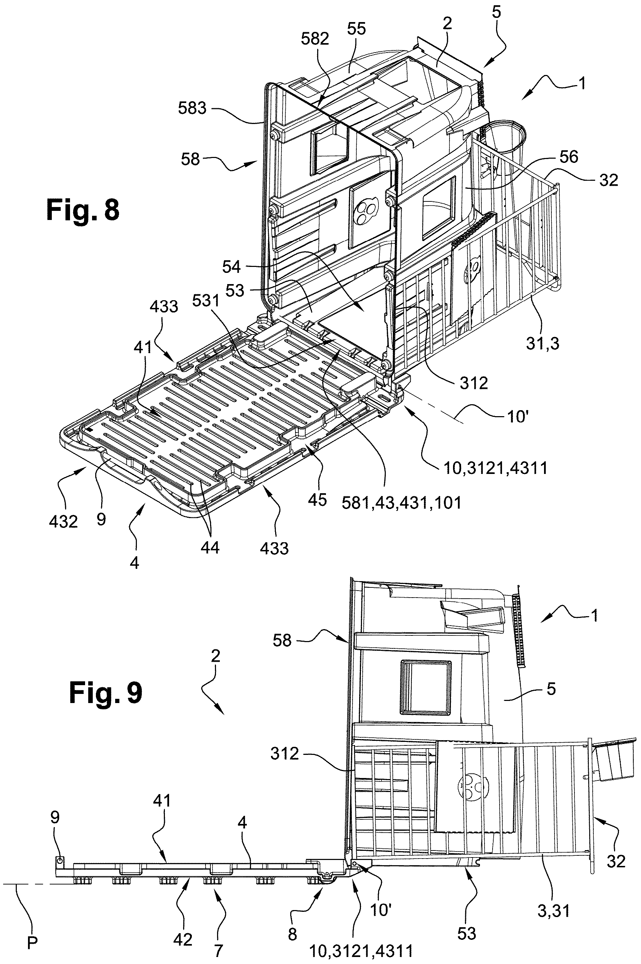

L'abri 2, de forme générale parallélépipédique, se compose lui-même de deux éléments principaux :
- un plancher ajouré 4, inférieur, de type caillebotis (visible plus en détails sur les figures 8 et 9) qui est destiné à reposer sur le sol, et
- une paroi périphérique 5, supérieure, prolongeant le plancher 4.

Le plancher 4 et la paroi périphérique 5 se composent chacun d'au moins une pièce réalisée dans une matière plastique, de préférence un matériau polymère thermoplastique. Ce plancher 4 et cette paroi périphérique 5 sont ainsi constitués par des pièces distinctes.

Le matériau polymère thermoplastique utilisé pour réaliser le plancher 4 et la paroi périphérique 5 est avantageusement choisi parmi des matériaux adaptés au procédé de fabrication par technique de rotomoulage (par exemple le polyéthylène, désigné couramment sous le sigle « PE »).

La paroi périphérique 5 présente une forme générale classique en soi, avec une partie supérieure galbée 52, formant un toit, prolongée par deux couples de cloisons opposées :
- deux cloisons transversales : une cloison avant 53, dans laquelle est ménagé un passage 54 pour la circulation de l'animal (figure 1), et une cloison arrière 55 (figure 2) et
- deux cloisons longitudinales 56, s'étendant entre lesdites cloisons transversales 53, 55.

Les cloisons 53, 55, 56 peuvent être équipées de différents accessoires, tels que des trappes d'accès, des supports de biberon, des râteliers à foin, des supports de seaux.

La paroi périphérique 5 comporte encore une bordure inférieure 58 (visible en particulier sur la figure 8), de forme générale rectangulaire, qui comprend deux couples de côtés opposés, à savoir :
- un couple de côtés transversaux, l'un avant 581 et l'autre arrière 582, correspondant respectivement aux bords inférieurs des cloisons avant 53 et arrière 55 précitées, et
- un couple de côtés longitudinaux 583, correspondant respectivement aux bords inférieurs des cloisons longitudinales 56 précitées.

Le côté transversal avant 581 de la bordure périphérique 58 s'étend le long d'une traverse inférieure 531 ménagée sous le passage 54 et reliant les deux côtés longitudinaux 583.

De son côté, le plancher 4 est visible en particulier sur les figures 8 et 9.

Ce plancher 4 comporte deux faces opposées :
- une face supérieure 41, destinée à être orientée à l'opposé du sol et vers la paroi périphérique 5 associée, et
- une face inférieure 42, destinée à être orientée vers le sol, comportant une structure de piètement 7 et des moyens de roulement 8 qui seront décrits plus en détails par la suite.

Ce plancher 4 comporte en plus une bordure périphérique rectangulaire 43 composée de deux couples de côtés opposés :
- un couple de côtés transversaux : un côté transversal avant 431, sous-jacent de la cloison avant 53, et un côté transversal arrière 432, destiné à venir de manière sous-jacente de la cloison arrière 55, et
- un couple de côtés longitudinaux 433, destinés à venir chacun de manière sous-jacente de l'une des cloisons longitudinales 56 de la paroi périphérique 5.

Ce plancher 4 comporte encore une pluralité de lumières traversantes 44, débouchant au travers des deux faces 41, 42 opposées, pour l'écoulement des jus depuis la face supérieure 41 de ce plancher 4.

Au sein de l'abri 2, le plancher 4 est assemblé avec la paroi périphérique 5 par le biais de moyens de liaison pivot 10 qui sont agencés pour autoriser une manoeuvre en rotation de cette paroi périphérique 5 par rapport au plancher 4.

La paroi périphérique 5 est ainsi apte à être manoeuvrée par l'éleveur entre deux positions :
- une position abaissée (figures 1 à 7), dans laquelle la bordure inférieure 58 de la paroi périphérique 5 est attenante à la face supérieure 41 du plancher 4, pour délimiter un espace d'accueil intérieur pour l'animal, et
- une position relevée (figures 8 et 9), dans laquelle la paroi périphérique 5 est pivotée par rapport au plancher 4, avec la bordure inférieure 58 de la paroi périphérique 5 écartée de la face supérieure 41 du plancher 4, de manière à faciliter l'accès à ce plancher 4 et/ou à l'intérieur de la paroi périphérique 5.

La paroi périphérique 5 est structurée pour assurer une stabilité dans sa position relevée, sans nécessiter de moyens de verrouillage, avec un appui de sa cloison avant 53 sur le sol. Cette paroi périphérique 5 penche vers l'avant, par rapport à la verticale, pour renforcer ce maintien.

En l'espèce, dans le mode de réalisation illustré, les moyens de liaison pivot 10 sont ménagés entre le côté transversal avant 431 du plancher 4, et le côté transversal avant 581 de la bordure inférieure 58 de la paroi périphérique 5.

Ces moyens de liaison pivot 10 définissent ainsi un axe de rotation 10' s'étendant parallèlement à ces côtés transversaux avant 431, 581 précités.

L'axe de rotation 10' s'étend ainsi au niveau du plancher 4, du côté de la cloison avant 53 de la paroi périphérique 5 et de manière sous-jacente au passage 54 de l'abri 2, le long de la traverse inférieure 531 précitée.

La structure d'accueil 1 comporte ici également un parc 3, optionnel. Ce parc 3 comprend quant à lui deux panneaux latéraux 31 qui sont délimités chacun par deux extrémités, l'une avant 311 et l'autre arrière 312.

Les deux extrémités avant 311, en regard, sont reliées par un panneau transversal 32 ; et les deux extrémités arrière 312, en regard, sont chacune solidarisées avec l'abri 2 par l'intermédiaire d'une liaison pivot inférieure, tel que détaillé ci-dessous.

Les moyens de liaison pivot 10 assurent ici également l'assemblage du parc 3 avec l'abri 2, pour autoriser également une manoeuvre en rotation de ce parc 3 par rapport à l'abri 2 autour de l'axe de rotation 10' précité.

Pour cela, les bords inférieurs 3121 de chacune des deux extrémités arrière 312 des panneaux latéraux 31 sont solidarisés au niveau du côté avant 431 du plancher 4, sous-jacent du passage 54 de la paroi périphérique 5, par le biais de ces moyens de liaison pivot 10.

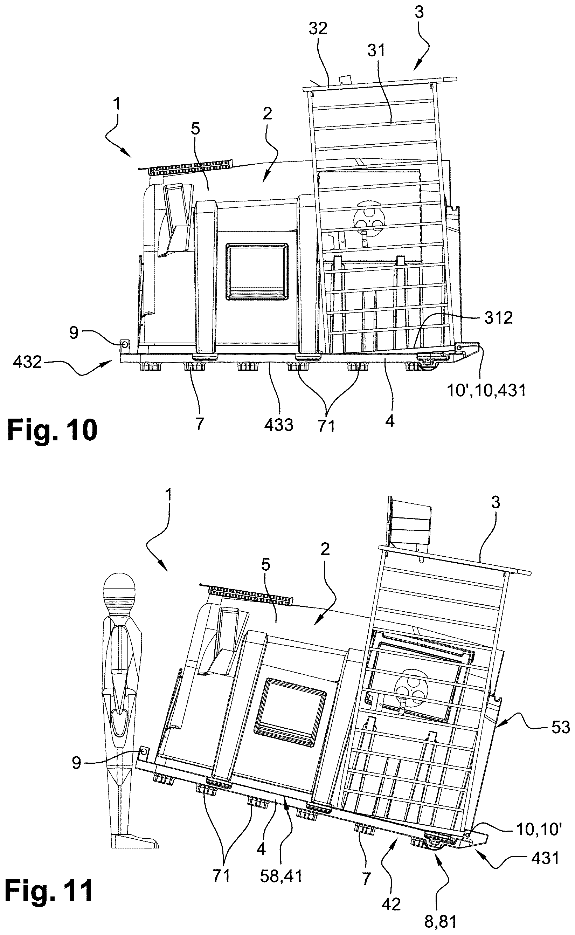

Les moyens de liaison pivot 10 autorisent ainsi une manoeuvre en rotation du parc 3 par rapport à l'abri 2 entre deux positions :
- une position déployée (figures 1 à 3), dans laquelle le parc 3 est apte à reposer sur le sol et agencé en regard du passage 54 de l'abri 2 pour délimiter un espace d'accueil extérieur pour l'animal, et
- une position escamotée (figures 10 et 11), dans laquelle le parc 3 est relevé par rapport au sol de sorte que les panneaux latéraux 31 s'étendent de part et d'autre de la paroi périphérique 5 de l'abri 2 et que le panneau transversal 32 s'étende au-dessus de la paroi périphérique 5 de l'abri 2.

Le parc 3 est structuré pour assurer une stabilité dans sa position escamotée, sans nécessiter de moyens de verrouillage. Ce parc 3 penche vers l'arrière, par rapport à la verticale, pour renforcer ce maintien.

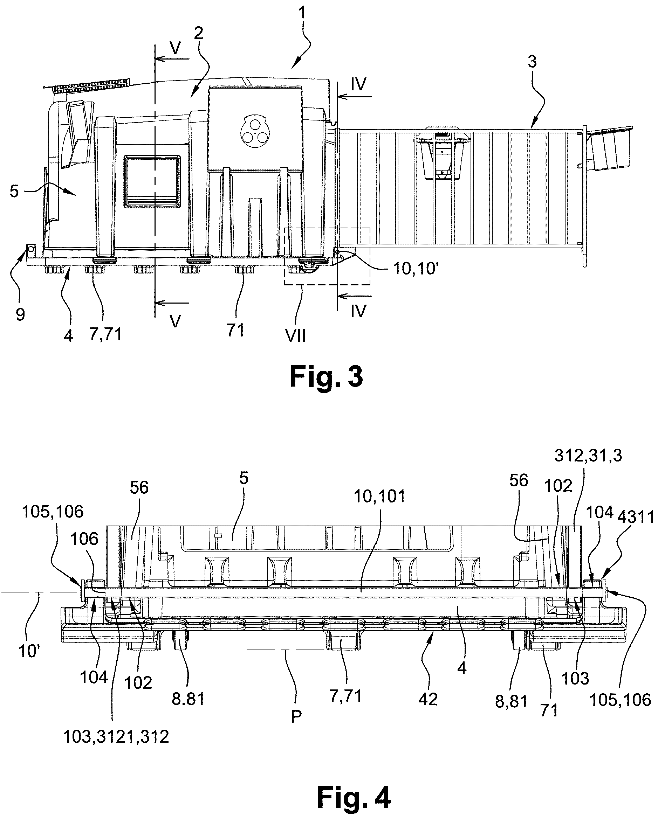

La structure de tels moyens de liaison pivot 10 est illustrée en détails par la figure 4. Ces moyens de liaison pivot 10 autorisent ici une liaison pivot amovible entre les différents éléments associés : le plancher 4, la paroi périphérique 5 et le parc 3.

Ces moyens de liaison pivot 10 comprennent pour cela un arbre amovible 101 qui est rapporté au travers de différents couples d'orifices coaxiaux ménagés dans les éléments 4, 5, 3 précités :
- un premier couple d'orifices 102 est ménagé au sein des cloisons longitudinales 56 de la paroi périphérique 5, du côté de l'angle formé par la cloison avant 53 et par la bordure inférieure 58,
- un deuxième couple d'orifices 103 est ménagé au niveau des bords inférieurs 3121 des extrémités arrière 312 des panneaux latéraux 31 du parc 3, lesdites extrémités arrière 312 étant disposées de part et d'autre de l'extrémité avant des cloisons longitudinales 56 de la paroi périphérique 5, et
- un troisièmes couple d'orifices 104 est ménagé au sein de deux organes saillants 4311 portés par le côté transversal avant 431 du plancher 4, agencés de part et d'autre des extrémités arrière 312 des panneaux latéraux 31 du parc 3.

Le verrouillage de l'arbre amovible 101 au sein de ses orifices coaxiaux 102, 103, 104 est réalisé au moyen de pièces rapportées 105 (par exemple du type clavettes ou goupilles) qui sont positionnées au sein d'orifices complémentaires 106 ménagés dans les extrémités de cet arbre amovible 101.

De préférence, l'arbre amovible 101 comporte plusieurs couples d'orifices traversants 106, répartis sur sa longueur, qui sont agencés de sorte à permettre l'ajustement de la distance entre les pièces rapportées 105.

Cette caractéristique technique permet notamment une séparation du plancher 4 par rapport à la paroi périphérique 5, tout en conservant la possibilité d'un assemblage en rotation entre la paroi périphérique 5 et le parc 3 (dans ce cas des roues amovibles peuvent être rapportées dans la partie inférieure 3121 des extrémités arrière 312 des panneaux latéraux 31 du parc 3 pour le déplacement de l'ensemble sur le sol).

Par ailleurs, le plancher 4 comporte encore différentes caractéristiques fonctionnelles, réparties sur ses deux faces 41, 42.

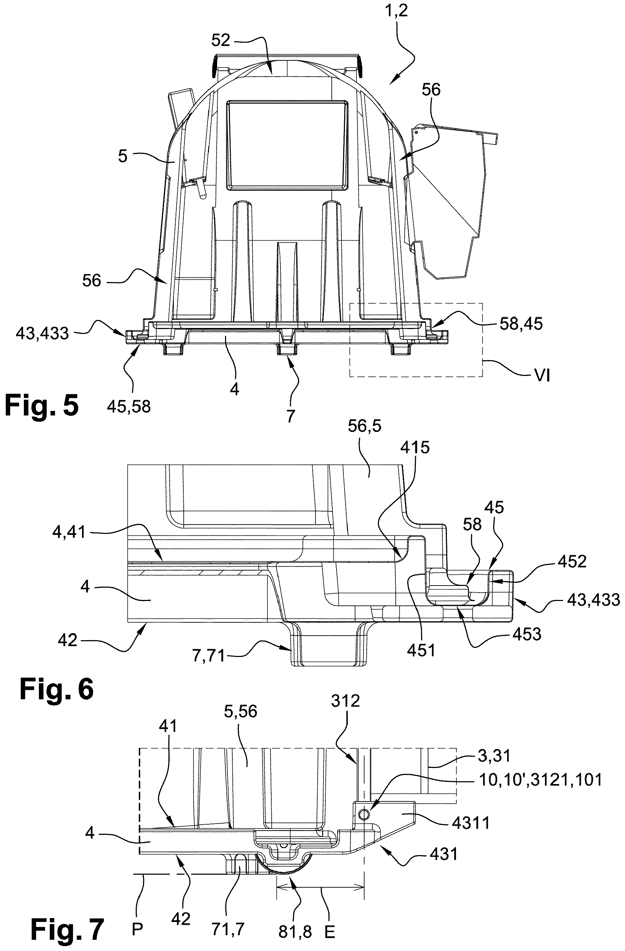

D'une part, la face supérieure 41 du plancher 4 comporte une gorge périphérique 45 (détaillée sur la figure 6), ménagée le long de sa bordure périphérique 43, qui est destinée à recevoir la bordure inférieure 58 de la paroi périphérique 5 en position abaissée.

Cette gorge périphérique 45 est ainsi destinée à permettre un calage efficace entre la paroi périphérique 5 et son plancher 4 ; elle permet également de limiter le décalage de la bordure inférieure 58 de la paroi périphérique 5 par rapport au sol, conférant ainsi un abaissement du seuil d'entrée du passage 54.

Cette gorge périphérique 45 comporte en particulier deux bords, l'un intérieur 451 (à distance de la bordure périphérique 43) et l'autre extérieur 452 (à proximité de la bordure périphérique 43) reliés par un fond 453.

La face supérieure 41 du plancher 4 comporte encore une nervure périphérique 415, ménagée le long du bord intérieur 451 de la gorge périphérique 45 et s'étendant vers le haut.

Cette nervure périphérique 415 forme une remontée qui crée une retenue, par exemple pour un matelas de paille rapporté sur la surface supérieure 41 du plancher 4, et qui force les jus à s'écouler par les ouvertures du plancher 4, limitant ainsi les écoulements dans la gorge 45.

D'autre part, la face inférieure 42 du plancher 4 comporte la structure de piètement 7 précitée qui est constituée d'un ensemble de plots 71 régulièrement répartis (visibles notamment figures 4 et 7).

Cette structure de piètement 7 définit un plan de pose P qui est décalé verticalement par rapport à la face inférieure 42 du plancher 4 (figure 7).

Cette structure de piètement 7 est ainsi intéressante pour laisser un passage entre la face inférieure 42 du plancher 4 et le sol, favorisant l'écoulement des jus au travers du plancher 4.

Il est également possible d'effectuer un nettoyage par un jet d'eau, en cas de pose sur une dalle béton équipée de caniveaux pour la récolte des liquides.

La face inférieure 42 du plancher 4 est encore équipée des moyens de roulement 8 (visibles en particulier sur les figures 4 et 7), pour faciliter le déplacement de la structure d'accueil 1 sur le sol.

Les moyens de roulement 8 sont ménagés au niveau de la bordure périphérique 43 du plancher 4, en l'occurrence le long de son côté avant 431.

Ces moyens de roulement 8 comprennent des roues 81, ici au nombre de deux, qui sont montées en rotation libre autour d'un axe parallèle au côté avant 431 du plancher 4.

Comme on peut l'observer notamment sur la figure 7, ces moyens de roulement 8 se situent :
- dans le plan de pose P défini par la structure de piètement 7, ou légèrement au-dessus de ce plan P, et
- au moins partiellement dans l'espace E s'étendant entre la structure piètement 7 et le côté avant 431 du plancher 4.

Les moyens de roulement 8 présentent ainsi deux positions :
- une position inactive, lorsque le plancher 4 repose sur le sol par le biais de sa structure de piètement 7, et
- une position active, obtenue par le relevage de son côté arrière 432 et le basculement du plancher 4 le long de son côté avant 431 muni des moyens de roulement 8 (le plancher 4 présente ainsi une pente descendante depuis son côté arrière 432 jusqu'à son côté avant 431).

Pour basculer le plancher 4, l'abri 2 comporte des moyens de préhension 9 qui sont ménagés au niveau d'un côté du plancher 4 qui est opposé aux moyens de roulement 8, en l'occurrence le côté arrière 432.

En l'espèce, ces moyens de préhension 9 sont portés directement par ce côté arrière 432 qui est décalé et en saillie par rapport à la cloison arrière 55 de la paroi périphérique 5 (figure 2). Ils se présentent sous la forme d'une poignée constituée d'une barre de préhension 91 portée par deux supports latéraux 92.

Ainsi, en pratique, pour recevoir un animal, la structure d'accueil 1 est agencée selon la configuration illustrée sur les figures 1 à 7, avec :
- la paroi périphérique 5 en position abaissée, pour définir l'espace d'accueil intérieur avec le plancher 4, et
- le parc 3 en position déployée, pour définir l'espace d'accueil extérieur.

Si l'éleveur souhaite accéder à l'espace d'accueil intérieur, il lui suffit alors de manoeuvrer en pivotement la paroi périphérique 5 par rapport au plancher 4 (autour de la liaison pivot 10), depuis sa position abaissée (figures 1 à 7) jusqu'à sa position relevée (figures 8 et 9) dans laquelle la cloison avant 53 vient prendre appui sur le sol.

La paroi périphérique 5 vient se placer au sein du parc 3 en position déployée.

Le plancher 4 reste en appui sur le sol, tout au long de cette manoeuvre. Il constitue une sorte de base ou de socle, pour guider la manoeuvre en pivotement de la paroi périphérique 5.

Une manoeuvre de la paroi périphérique 5 en rotation inverse permet de retrouver l'abri 2 fonctionnel.

Les moyens de liaison pivot 10 ont ainsi l'intérêt d'assurer un guidage de la paroi périphérique 5 tout au long de ces manoeuvres.

Lorsque l'éleveur souhaite déplacer la structure d'accueil 1, ou faciliter son accès à l'espace d'accueil extérieur, il peut pivoter le parc 3 dans sa position escamotée (figure 10).

Ce pivotement est guidé là encore par les moyens de liaison pivot 10.

Les extrémités arrière 312 des panneaux latéraux 31 viennent alors reposer sur les côtés longitudinaux 433 du plancher 4.

La paroi périphérique 5 en position abaissée.

L'éleveur peut alors saisir les moyens de préhension 9 de sorte à relever le côté transversal arrière 432 et basculer légèrement la structure d'accueil 1 le long du côté transversal avant 431 du plancher 4.

Le plancher 4 présente ainsi une pente descendante depuis son côté transversal arrière 432 jusqu'à son côté transversal avant 431. La paroi périphérique 5 et le parc 3 restent en appui sur le plancher 4.

Ce basculement de la structure d'accueil 1 (et notamment de son plancher 4) permet d'amener les moyens de roulement 8 en appui sur le sol (figure 11). Le centre de gravité du parc 3 reste à l'arrière du plan vertical passant par l'axe de pivotement 10', de sorte que ce parc 3 demeure en position escamotée.

L'éleveur peut alors déplacer sans difficulté la structure d'accueil 1 sur le sol, grâce aux moyens de roulement 8 en position active.

Une fois la structure d'accueil 1 convenablement positionnée au sein de l'élevage, il suffit pour l'éleveur de relâcher les moyens de préhension 9, et ladite structure d'accueil 1 revient dans une position stable, avec son plancher 4 en appui sur le sol par le biais de sa structure de piètement 7.

De manière générale, l'assemblage selon l'invention entre la paroi périphérique 5 et le plancher 4 présente de nombreux avantages, notamment :
- une ergonomie optimale pour l'accès à l'espace intérieur d'accueil, grâce au guidage de la manoeuvre en pivotement de la paroi périphérique 5, et
- une ergonomie optimale pour le déplacement de la structure d'accueil 1, grâce aux moyens de roulement 8 équipant le plancher 4.

## Revendications

1. Structure d'accueil pour un animal d'élevage, en particulier un veau, laquelle structure d'accueil (1) comprend un abri (2) délimitant un espace d'accueil intérieur pour ledit animal,
lequel abri (2) comprend :
- une paroi périphérique (5), comportant une bordure inférieure (58) et une cloison avant (53) dans laquelle est ménagé un passage (54) pour la circulation dudit animal, et
- un plancher (4), du type caillebotis, comportant une face supérieure (41) sur laquelle repose ladite bordure inférieure (58) de ladite paroi périphérique (5),
ledit plancher (4) étant assemblé avec ladite paroi périphérique (5) par le biais de moyens de liaison pivot (10) agencés pour autoriser une manoeuvre en rotation de ladite paroi périphérique (5) par rapport audit plancher (4) entre deux positions :
- une position abaissée, dans laquelle ladite bordure inférieure (58) de ladite paroi périphérique (5) est attenante à ladite face supérieure (41) dudit plancher (4), pour délimiter ledit espace d'accueil intérieur, et
- une position relevée, dans laquelle ladite paroi périphérique (5) est pivotée par rapport audit plancher (4), de manière à faciliter l'accès audit plancher (4) et/ou à l'intérieur de ladite paroi périphérique (5),
laquelle structure d'accueil comprend encore un parc (3) destiné à délimiter un espace d'accueil extérieur pour ledit animal,
lequel parc (3) comprend deux panneaux latéraux (31) délimités chacun par deux extrémités, à savoir :
- deux extrémités avant (311) en regard, reliées par un panneau transversal (32), et
- deux extrémités arrière (312) en regard,
**caractérisé en ce que** lesdites deux extrémités arrières (312) des panneaux latéraux (31) du parc (3) sont solidarisées avec ledit abri (2) par le biais de moyens de liaison pivot (10) agencés pour autoriser une manoeuvre en rotation dudit parc (3) par rapport audit abri (2) entre deux positions :
- une position déployée, apte à reposer sur le sol et agencée en regard du passage (54) de l'abri (2) pour délimiter ledit espace d'accueil extérieur, et
- une position escamotée, dans laquelle ledit parc (3) est relevé par rapport au sol de sorte que les panneaux latéraux (31) s'étendent de part et d'autre de la paroi périphérique (5) de l'abri (2) et que le panneau transversal (32) s'étende au-dessus de la paroi périphérique (5) de l'abri (2),
et **en ce que** lesdits moyens de liaison pivot (10) entre le plancher (4) et la paroi périphérique (5) de l'abri (2) sont agencés au niveau de la cloison avant (53) de la paroi périphérique (5), sous-jacent dudit passage (54).

2. Structure d'accueil pour un animal d'élevage, selon la revendication 1, **caractérisée en ce que** lesdits moyens de liaison pivot (10) entre le plancher (4) et la paroi périphérique (5) de l'abri (2) forment également lesdits moyens de liaison pivot (10) entre l'abri (2) et le parc (3), permettant un pivotement selon un même axe de pivotement (10').

3. Structure d'accueil pour un animal d'élevage, selon l'une quelconque des revendications 1 ou 2, **caractérisée en ce que** les moyens de liaison pivot (10) consistent en des moyens adaptés à assurer une liaison pivot amovible entre ledit plancher (4), ladite paroi périphérique (5) et ledit parc (3).

4. Structure d'accueil pour un animal d'élevage, selon les revendications 2 et 3 en combinaison, **caractérisée en ce que** lesdits moyens de liaison pivot (10) comprennent un arbre amovible (101), s'étendant au travers d'orifices coaxiaux (102, 103, 104) ménagés dans ladite paroi périphérique (5), ledit plancher (4) et ledit parc (3).

5. Structure d'accueil pour un animal d'élevage, selon la revendication 4, **caractérisée en ce que** :
- la paroi périphérique (5) de l'abri (2) comprend deux cloisons longitudinales (56) dont les extrémités avant, du côté de la cloison avant (53), sont munies d'un premier couple (102) desdits orifices (102, 103, 104),
- les extrémités arrière (312) des panneaux latéraux (31) du parc (3) sont munies d'un deuxième couple (103) desdits orifices (102, 103, 104) et sont disposées de part et d'autre desdites cloisons longitudinales (56), et
- le plancher (4) comporte un côté avant (431) comportant deux organes saillants (4311) qui sont munis d'un troisième couple (104) desdits orifices (102, 103, 104) et qui sont ménagés de part et d'autre desdites extrémités arrière (312) des panneaux latéraux (31) du parc (3).

6. Structure d'accueil pour un animal d'élevage, selon l'une quelconque des revendications 1 à 5, **caractérisée en ce que** le plancher (4) comprend une face inférieure (42), destinée à être orientée vers le sol, qui est équipée de moyens de roulement (8) sur le sol.

7. Structure d'accueil pour un animal d'élevage, selon la revendication 6, **caractérisée en ce que** le plancher (4) comporte deux côtés opposés, l'un avant (431) sous-jacent du passage (54) ménagé dans la paroi périphérique (5) et l'autre arrière (432),
**en ce que** les moyens de roulement (8) se situent au niveau dudit côté avant (431),
et **en ce que** ledit côté arrière (432) est équipé de moyens de préhension (9).

8. Structure d'accueil pour un animal d'élevage, selon l'une quelconque des revendications 1 à 7, **caractérisée en ce que** le plancher (4) comprend une face inférieure (42), destinée à être orientée vers le sol, et **en ce que** ladite face inférieure (42) du plancher (4) comporte une structure de piètement (7), de sorte à former un plan de pose (P) sur le sol décalé verticalement par rapport à ladite face inférieure (42).

9. Structure d'accueil pour un animal d'élevage, selon les revendications 7 et 8 en combinaison, **caractérisée en ce que** les moyens de roulement (8) se situent, d'une part, dans ou au-dessus dudit plan de pose (P) et, d'autre part, au moins partiellement entre la structure de piètement (7) et le côté avant (431) du plancher (4).

10. Structure d'accueil pour un animal d'élevage, selon l'une quelconque des revendications 1 à 9, **caractérisée en ce que** la face supérieure (41) du plancher (4) comporte une gorge périphérique (45) destinée à recevoir ladite bordure inférieure (58) de la paroi périphérique (5).

11. Structure d'accueil pour un animal d'élevage, selon la revendication 10, **caractérisée en ce que** la gorge périphérique (45) du plancher (4) comporte un bord intérieur (451) et un bord extérieur (452),
et **en ce que** la face supérieure (41) du plancher (4) comporte une nervure périphérique (415) ménagée le long dudit bord intérieure (451) de la gorge périphérique (45).

## Patentansprüche

1. Aufnahmestruktur für ein Zuchttier, insbesondere ein Kalb, wobei die Aufnahmestruktur (1) einen Schutzraum (2) aufweist, der einen inneren Aufnahmeraum für das Tier begrenzt,
wobei der Schutzraum (2)
- eine Umfangswandung (5) mit einem unteren Rand (58) und einer vorderen Wand (53), in der ein Durchgang (54) für die Bewegungen des Tieres eingerichtet ist, und
- einen Boden (4) vom Typ eines Gitterrosts mit einer Oberseite (41), auf der der untere Rand (58) der Umfangswandung (5) ruht, aufweist,
wobei der Boden (4) mit der Umfangswandung (5) durch schwenkbare Verbindungsmittel (10) verbunden ist, die so angeordnet sind, daß sie eine Drehbewegung der Umfangswandung (5) gegenüber dem Boden (4) zwischen zwei Stellungen ermöglichen:
- einer abgesenkten Stellung, in der der untere Rand (58) der Umfangswandung (5) an der Oberseite (41) des Bodens (4) anliegt, um den inneren Aufnahmeraum zu begrenzen, und
- einer angehobenen Stellung, in der die Umfangswandung (5) gegenüber dem Boden (4) verschwenkt ist, um den Zugang zum Boden (4) und/oder zum Inneren der Umfangswandung (5) zu erleichtern,
wobei die Aufnahmestruktur außerdem ein Laufgitter (3) aufweist, das dazu bestimmt ist, einen äußeren Aufnahmeraum für das Tier zu begrenzen,
wobei das Laufgitter (3) zwei seitliche Paneele (31) aufweist, von denen jedes durch zwei Enden begrenzt ist, und zwar
- zwei einander gegenüberliegende vordere Enden (311), die durch ein Querpaneel (32) verbunden sind, und
- zwei einander gegenüberliegende hintere Enden (312),
**dadurch gekennzeichnet, daß** die beiden hinteren Enden (312) der seitlichen Paneele (31) des Laufgitters (3) mit dem Schutzraum (2) durch schwenkbare Verbindungsmittel (10) verbunden sind, die so angeordnet sind, daß sie eine Drehbewegung des Laufgitters (3) gegenüber dem Schutzraum (2) zwischen zwei Stellungen ermöglichen:
- einer ausgefahrenen Stellung, in der es auf dem Boden ruhen kann und gegenüber dem Durchgang (54) des Schutzraums (2) angeordnet ist, um den äußeren Aufnahmeraum zu begrenzen, und
- einer zusammengeklappten Stellung, in der das Laufgitter (3) gegenüber dem Boden angehoben ist, so daß sich die seitlichen Paneele (31) beiderseits der Umfangswandung (5) des Schutzraums (2) erstrecken und sich das Querpaneel (32) oberhalb der Umfangswandung (5) des Schutzraums (2) erstreckt.

2. Aufnahmestruktur für ein Zuchttier gemäß Anspruch 1, **dadurch gekennzeichnet, daß** die schwenkbaren Verbindungsmittel (10) zwischen dem Boden (4) und der Umfangswandung (5) des Schutzraums (2) gleichzeitig die schwenkbaren Verbindungsmittel (10) zwischen dem Schutzraum (2) und dem Laufgitter (3) bilden, was ein Schwenken um eine salbe Schwenkachse (10') ermöglicht.

3. Aufnahmestruktur für ein Zuchttier gemäß einem der Ansprüche 1 oder 2, **dadurch gekennzeichnet, daß** die schwenkbaren Verbindungsmittel (10) aus Mitteln bestehen, die dazu ausgelegt sind, eine entfernbare Schwenkverbindung zwischen dem Boden (4), der Umfangswandung (5) und dem Laufgitter (3) sicherzustellen.

4. Aufnahmestruktur für ein Zuchttier gemäß den kombinierten Ansprüchen 2 und 3, **dadurch gekennzeichnet, daß** die schwenkbaren Verbindungsmittel (10) eine entfernbare Achse (101) aufweisen, die sich durch in der Umfangswandung (5), dem Boden (4) und dem Laufgitter (3) eingebrachte koaxiale Löcher (102, 103, 104) erstreckt.

5. Aufnahmestruktur für ein Zuchttier gemäß Anspruch 4, **dadurch gekennzeichnet, daß**
- die Umfangswandung (5) des Schutzraums (2) zwei Längswände (56) aufweist, deren vordere Enden auf der Seite der vorderen Wand (53) mit einem ersten Paar (102) der besagten Löcher (102, 103, 104) versehen sind,
- die hinteren Enden (312) der seitlichen Paneele (31) des Laufgitters (3) mit einem zweiten Paar (103) der besagten Löcher (102, 103, 104) versehen sind und beiderseits der Längswände (56) angeordnet sind und
- der Boden (4) eine Vorderseite (431) aufweist, die zwei vorstehende Elemente (4311) aufweiset, die mit einem dritten Paar (104) der Löcher (102, 103, 104) versehen sind und die beiderseits der hinteren Enden (312) der seitlichen Paneele (31) des Laufgitters angeordnet sind.

6. Aufnahmestruktur für ein Zuchttier gemäß einem der Ansprüche 1 bis 5, **dadurch gekennzeichnet, daß** der Boden (4) eine Unterseite (42) aufweist, die dazu bestimmt ist, zum Erdboden hin gerichtet zu sein, und die mit Mitteln (8) zum Rollen auf dem Erdboden ausgestattet ist.

7. Aufnahmestruktur für ein Zuchttier gemäß Anspruch 6, **dadurch gekennzeichnet, daß** der Boden (4) zwei entgegengesetzte Seiten aufweist, und zwar eine vordere (431), unter dem in der Umfangswandung (5) eingebrachten Durchgang (54). Liegende und eine hintere (432),
daß die Mittel (8) zum Rollen an der Vorderseite (431) angeordnet sind und
daß die hintere Seite (432) mit Mitteln (9) zum Anfassen ausgestattet ist.

8. Aufnahmestruktur für ein Zuchttier gemäß einem der Ansprüche 1 bis 7, **dadurch gekennzeichnet, daß** der Boden (4) eine Unterseite (42) aufweist, die dazu bestimmt ist, zum Erdboden hin gerichtet zu sein, und daß die Unterseite (42) des Bodens (4) eine Gestellstruktur (7) aufweist, um eine gegenüber der Unterseite (42) senkrecht versetzte Auflageebene (P) auf dem Erdboden zu bilden.

9. Aufnahmestruktur für ein Zuchttier gemäß den kombinierten Ansprüchen 7 und 8, **dadurch gekennzeichnet, daß** sich die Mittel (8) zum Rollen einerseits in oder oberhalb der Auflageebene (P) und andererseits wenigstens teilweise zwischen der Gestellstruktur (7) und der Vorderseite (431) des Bodens (4) befinden.

10. Aufnahmestruktur für ein Zuchttier gemäß einem der Ansprüche 1 bis 9, **dadurch gekennzeichnet, daß** die Oberseite (41) des Bodens (4) eine umlaufende Rille (45) aufweist, die dazu bestimmt ist, den unteren Rand (58) der Umfangswandung (5) aufzunehmen.

11. Aufnahmestruktur für ein Zuchttier gemäß Anspruch 10, **dadurch gekennzeichnet, daß** die umlaufende Rille (45) des Bodens (4) einen inneren Rand (451) und einen äußeren Rand (452) aufweist und
daß die Oberseite (41) des Bodens (4) eine entlang des inneren Rands (451) der umlaufenden Rille (45) angeordnete Rippe (415) aufweist.

## Claims

1. A housing structure for a livestock animal, in particular a calf, wherein said housing structure (1) comprises a shelter (2) delimiting an inner housing space for said animal,
wherein said shelter (2) comprises:
- a peripheral wall (5), having a lower edge (58) and a front wall (53) in which is arranged a passage (54) for the circulation of said animal, and
- a floor (4), of the duckboard type, having an upper face (41) on which bears said lower edge (58) of said peripheral wall (5),
said floor (4) being assembled with said peripheral wall (5) using pivot link means (10) arranged so as to allow a rotational operation of said peripheral wall (5) with respect to said floor (4) between two positions:
- a lowered position, in which said lower edge (58) of said peripheral wall (5) is adjacent to said upper face (41) of said floor (4), to delimit said inner housing space, and
- a lifted position, in which said peripheral wall (5) is pivoted with respect to said floor (4), so as to facilitate the access to said floor (4) and/or to the inside of said peripheral wall (5),
wherein said housing structure also comprises a park (3) intended to delimit an outer housing space for said animal,
wherein said park (3) comprises two lateral panels (31) each delimited by two ends, i.e.:
- two opposite frond ends (311), connected by a transverse panel (32), and
- two opposite rear ends (312),
**characterized in that** said two rear ends (312) of the lateral panels (31) of the park (3) are fastened to said shelter (2) using pivot link means (10) arranged so as to allow a rotational operation of said park (3) with respect to said shelter (2) between two positions:
- an extended position, adapted to bear on the ground and arranged opposite the passage (54) of the shelter (2) to delimit said outer housing space, and
- an retracted position, in which said park (3) is lifted with respect to the ground so that the lateral panels (31) extend on either side of the peripheral wall (5) of the shelter (2) and **in that** the transverse panel (32) extends above the peripheral wall (5) of the shelter (2),
and **in that** said pivot link means (10) between the floor (4) and the peripheral wall (5) of the shelter (2) are arranged at the front wall (53) of the peripheral wall (5), adjacent to said passage (54).

2. The housing structure for a livestock animal according to claim 1, **characterized in that** said pivot link means (10) between the floor (4) and the peripheral wall (5) of the shelter (2) also form said pivot link means (10) between the shelter (2) and the park (3), allowing a pivoting about a same pivoting axis (10').

3. The housing structure for a livestock animal according to any one of claims 1 or 2, **characterized in that** the pivot link means (10) consist in means adapted to ensure a removable pivot link between said floor (4), said peripheral wall (5) and said park (3).

4. The housing structure for a livestock animal according to claims 2 and 3 in combination, **characterized in that** said pivot link means (10) comprise a removable shaft (101), extending through coaxial orifices (102, 103, 104) formed in said peripheral wall (5), said floor (4) and said park (3).

5. The housing structure for a livestock animal according to claim 4, **characterized in that**:
- the peripheral wall (5) of the shelter (2) comprises two longitudinal walls (56) whose front ends, on the side of the front wall (53), are provided with a first couple (102) of said orifices (102, 103, 104),
- the rear ends (312) of the lateral panels (31) of the park (3) are provided with a second couple (103) of said orifices (102, 103, 104) and are arranged on either side of said longitudinal walls (56),
and
- the floor (4) has a front side (431) including two protruding members (4311) that are provided with a third couple (104) of said orifices (102, 103, 104) and that are provided on either side of said rear ends (312) of the lateral panels (31) of the park (3).

6. The housing structure for a livestock animal according to any one of claims 1 to 5, **characterized in that** the floor (4) comprises a lower face (42), intended to be oriented towards the ground, that is equipped with means (8) for rolling on the ground.

7. The housing structure for a livestock animal according to claim 6, **characterized in that** the floor (4) has two opposite sides, a front one (431) underlying the passage (54) formed in the peripheral wall (5), and a rear one (432),
and **in that** the rolling means (8) are located at said front side (431),
and **in that** said rear side (432) is equipped with gripping means (9).

8. The housing structure for a livestock animal according to any one of claims 1 to 7, **characterized in that** the floor (4) comprises a lower face (42), intended to be oriented towards the ground, and **in that** said lower face (42) of the floor (4) includes a leg structure (7), so as to form a ground laying plan (P), vertically offset with respect to said lower face (42).

9. The housing structure for a livestock animal according to claims 7 and 8 in combination, **characterized in that** the rolling means (8) are located, on the one hand, in or above said laying plan (P), and on the other hand, at least partially between the leg structure (7) and the front side (431) of the floor (4).

10. The housing structure for a livestock animal according to any one of claims 1 to 9, **characterized in that** the upper face (41) of the floor (4) includes a peripheral groove (45) intended to receive said lower edge (58) of the peripheral wall (5).

11. The housing structure for a livestock animal according to claim 10, **characterized in that** the peripheral groove (45) of the floor (4) has an inner edge (451) and an outer edge (452),
and **in that** the upper face (41) of the floor (4) includes a peripheral rib (415) formed along said inner edge (451) of the peripheral groove (45).
